# EUROPEAN PATENT APPLICATION

(11) **EP 1 562 248 A2**
(43) Date of publication of application: **10.08.2005**
(21) Application number: 05000420.9
(22) Date of filing: 11.01.2005
(51) Int. Cl.: H01M 10/00, H01M 10/40, H01M 4/02, H01M 4/36, H01M 4/58, H01M 10/06, H01M 10/34, H01M 10/30

(54) **Device for storing electrical energy**

(30) Priority: 13.01.2004 JP 2004005527
(71) Applicant: Hitachi, Ltd., Tokyo 100-8280 (JP)
(72) Inventor: Kumashiro, Yoshiaki, c/o Hitachi, Ltd., Chiyoda-ku, Tokyo 100-8220 (JP); Arai, Juichi, c/o Hitachi, Ltd., Chiyoda-ku, Tokyo 100-8220 (JP); Kobayashi, Mituru, c/o Hitachi, Ltd., Chiyoda-ku, Tokyo 100-8220 (JP); Hoshi, Eiji, c/o Hitachi, Ltd., Chiyoda-ku, Tokyo 100-8220 (JP)
(74) Representative: Strehl Schübel-Hopf & Partner

(57) **Abstract**

An energy device having high input-output performance, in particular being excellent in low temperature performance. An energy device characterized by storing and discharging electric energy by both a faradaic reaction mechanism wherein mainly the oxidation state of an active material changes and electric charge transfers inside said active material and a non-faradaic reaction mechanism wherein mainly ions are physically adsorbed and desorbed on the surface of an active material and resultantly electric charge is accumulated and discharged. Further, output performance at a low temperature is improved by providing an energy device characterized by storing and discharging electric energy by at least two kinds of reaction mechanisms that show low and high reaction rates respectively in faradaic reaction wherein mainly the oxidation state of an active material changes and electric charge transfers to said active material through an electrode interface.
The different reaction mechanisms take place on different areas of the electrodes.

## Description

### FIELD OF THE INVENTION

The present invention relates to an energy device that stores and discharges electric energy.

### BACKGROUND OF THE INVENTION

In late years, a power source having higher input-output than ever is longed for as a power source of an electric automobile, a hybrid automobile, an electric tool or the like. Further, a power source that allows rapid charge and discharge and moreover has a higher capacity is longed for. In particular, a power source that is less susceptible to temperature and capable of maintaining high input-output performance even at a low temperature of -20°C or -30°C is desired.

Such requirements have hitherto been coped with by: improving the performance of a secondary battery, the reaction mechanism of which is mainly faradaic, such as a lithium secondary battery, a nickel metal hydride battery, a nickel-cadmium battery, a lead acid battery or the like; or using in combination an electric double layer capacitor, the reaction mechanism of which is non-faradaic, having good input-output performance as a power source for instantaneous input and output and also good performance under a low temperature environment. Further, JP-A No. 260634/2002 discloses a lithium secondary battery produced by mixing activated carbon that is used as a material of an electric double layer capacitor in the positive electrode of the lithium secondary battery in the interior thereof with the aim of securing a higher energy density, a higher output density and better low temperature performance.

However, a secondary battery is inferior in charge-discharge performance under a large current and, in particular, the input-output performance thereof lowers conspicuously at a low temperature. Meanwhile, the problem of an electric double layer capacitor has been that it shows a low energy density. Moreover, in the case of mixing activated carbon that is used as a material of an electric double layer capacitor in the positive electrode of a lithium secondary battery in the interior thereof, since the amount of mixed activated carbon is hardly increased and the capacity of the capacitor is small, a sufficient improvement is not secured.

### SUMMARY OF THE INVENTION

The object of the present invention is to provide a novel energy device excellent in input-output performance at a low temperature by solving the above problems.

The present inventors have found that the aforementioned problems can be solved with a hybrid-type energy device having in single unit the combination of both the function that provides large input and output and the function that provides a high voltage and an energy capacity. That is, firstly an energy device according to the present invention has both the mechanisms of: faradaic reaction wherein mainly the oxidation state of an active material changes and electric charge transfers inside the active material; and non-faradaic reaction wherein mainly ions are physically adsorbed and desorbed on the surface of an active material and resultantly electric charge is accumulated and discharged. Secondary, an energy device according to the present invention has at least two kinds of reaction mechanisms that show low and high reaction rates respectively in faradaic reaction wherein mainly the oxidation state of an active material changes and electric charge transfers to the active material through an electrode interface.

"Faradaic reaction" referred to in the present invention means the reaction wherein the oxidation state of an active material changes, and electric charge passes through an electric double layer and transfers inside the active material through an electrode interface. The mechanism of this reaction is similar to that of the reaction in a primary or secondary battery. In contrast, "Non-faradaic reaction" means the reaction wherein the transfer of electric charge through an electrode interface does not occur, ions are physically adsorbed and desorbed on the surface of an electrode and resultantly electric charge is accumulated and discharged. The mechanism of this reaction is similar to that of the reaction in an electric double layer capacitor.

Likewise, a layer wherein mainly faradaic reaction occurs in the present invention means a layer wherein the oxidation state of an active material changes, and electric charge passes through an electric double layer and transfers inside the active material through an electrode interface. In contrast, a layer wherein mainly non-faradaic reaction occurs means a layer wherein the transfer of electric charge through an electrode interface does not occur, ions are physically adsorbed and desorbed on the surface of an electrode and resultantly electric charge is accumulated and discharged.

Further, there is reaction wherein electric charge is accumulated at an electrode interface like non-faradaic reaction and simultaneously faradaic reaction wherein electrons are exchanged with an active material is accompanied. The mechanism of the reaction is similar to that of reaction in an energy device called a redox capacitor. The reaction accompanies faradaic reaction but the reaction rate thereof is larger than that of the faradaic reaction in a secondary battery or the like. In this light, in the present invention, the faradaic reaction in a redox capacitor and the faradaic reaction in a secondary battery or the like are distinguished from each other as the faradaic reaction having different reaction rates respectively, and the reaction in a redox capacitor is called high-reaction-rate faradaic reaction and that in a secondary battery or the like is called low-reaction-rate faradaic reaction.

Note that, the terms "faradaic" and "non-faradaic" are broken down into two patterns as "faradaic" and "non-faradaic" in the types of batteries and the forms of energy storage. Meanwhile, since the present invention makes it possible to concentrate a layer wherein non-faradaic reaction occurs on the side closer to the opposed electrode, it is thought that the present invention can secure the effect of using a capacitor more conspicuously. Here, in the present invention, it is preferable that the area ratio of the portion exposed to the side of the opposed electrode of a layer wherein non-faradaic reaction occurs is from 30 to 100%.

By applying a configuration according to the present invention to an energy device, an energy device excellent in output performance particularly at a low temperature can be obtained.

### BRIEF DESCRIPTION OF THE DRAWINGS

Fig. 1a is a view showing a section of an example of a coin-type energy device according to the present invention;
Fig. 1b is a view showing a section of an example of another coin-type energy device according to the present invention;
Fig. 2 is a view showing a section of an example of another coin-type energy device according to the present invention;
Fig. 3 is a view showing a section of an example of another coin-type energy device according to the present invention;
Fig. 4 is a view showing a section of an example of another coin-type energy device according to the present invention;
Fig. 5 is a view showing a section of an example of another coin-type energy device according to the present invention;
Fig. 6 is a view showing a section of an example of another coin-type energy device according to the present invention;
Fig. 7 is a view showing a section of the coin-type lithium secondary battery of Comparative Example 1;
Fig. 8 is a graph showing the I-V characteristic used in the computation of output performance;
Fig. 9 is a graph showing the discharge curves measured at -30°C;
Fig. 10 is a view showing a section of the coin-type energy device of Example 2;
Fig. 11 is a view showing a section of the coin-type energy device of Example 3;
Fig. 12 is another graph showing the discharge curves measured at -30°C;
Fig. 13 is a view showing a section of an example of another coin-type energy device according to the present invention;
Fig. 14 is a view showing a section of an example of another coin-type energy device according to the present invention;
Fig. 15 is a view showing a section of an example of another coin-type energy device according to the present invention;
Fig. 16 is a view showing a section of an example of another coin-type energy device according to the present invention; and
Fig. 17 is a view showing a section of an example of another coin-type energy device according to the present invention.

### DETAILED DESCRIPTION OF THE PREFERRED EMBODIMENTS

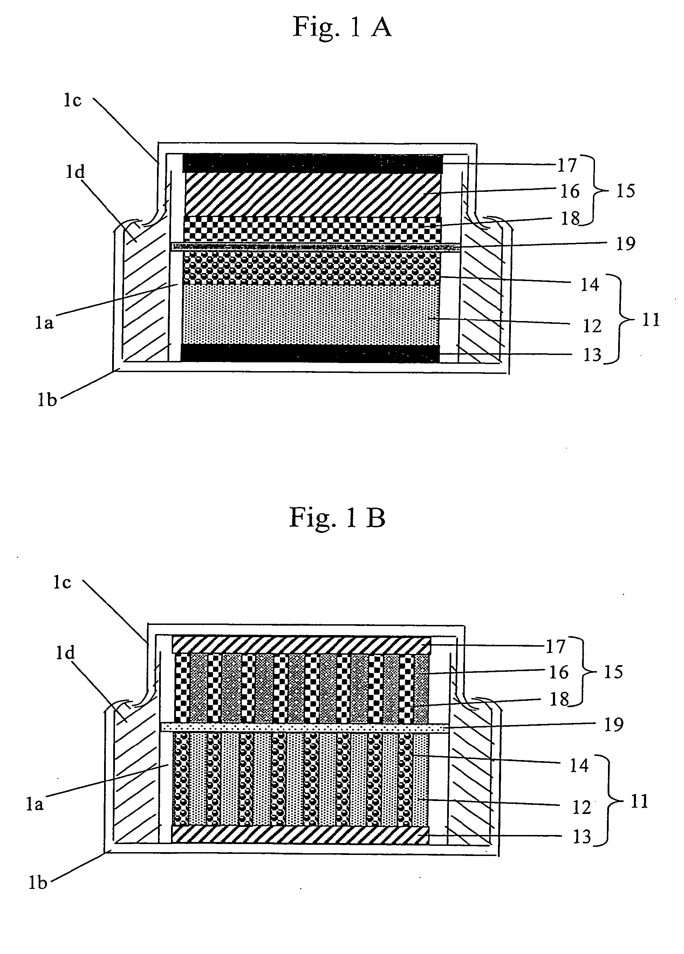

An embodiment according to the present invention is explained hereunder on the basis of Fig. 1. Fig. 1a is a schematic view showing a section of the coin-type energy device of an embodiment according to the present invention. The reference numeral 11 is a positive electrode plate and is produced by coating a positive electrode collector 13 with a positive electrode 12 comprising a layer wherein faradaic reaction occurs and a layer 14 wherein faradaic reaction of a higher reaction rate than the positive electrode 12 or non-faradaic reaction occurs. The reference numeral 15 is a negative electrode plate and is produced by coating a negative electrode collector 17 with a negative electrode 16 comprising a layer wherein faradaic reaction occurs and a layer 18 wherein faradaic reaction of a higher reaction rate than the negative electrode 16 or non-faradaic reaction occurs.

The device is produced by: interposing an insulating layer 19 between the positive electrode plate 11 and the negative electrode plate 15, the insulating layer electrically insulating the positive electrode plate and the negative electrode plate from each other and allowing only movable ions to pass through; inserting them in a case; and thereafter injecting electrolyte 1a. Here, a positive electrode can 1b and a negative electrode can 1c are sealed by a gasket 1d and insulated from each other. By the insulating layer and the electrolyte 1a sufficiently held by the electrodes, it becomes possible to secure the electrical insulation between the positive electrode plate 11 and the negative electrode plate 15 and to exchange ions between the positive electrode plate and the negative electrode plate.

Here, in this embodiment, the positive and negative electrodes and the layers 14 and 18 are arranged in the vertical direction and the figure shows the state wherein they are piled in the direction from the positive electrode toward the negative electrode.

It is also possible to produce an energy device of a type other than a coin type. In the case of a cylindrical type, a group of electrodes is fabricated by interposing an insulating layer between a positive electrode plate and a negative electrode plate and in this state winding them in layers. When the electrodes are wound in layers around two axes, an oval type electrode group is obtained. In the case of a square type, an electrode group is produced by: cutting a positive electrode plate and a negative electrode plate into a rectangular shape; laminating the cut positive electrode plates and negative electrode plates alternately; and inserting an insulating layer between the electrodes. The present invention is not limited to the structures of the above-mentioned electrode groups but is applicable to an arbitrary structure.

Fig. 1b shows another embodiment according to the present invention. In Fig. 1b, the reference numerals are identical to those in Fig. 1a. In the embodiment, the positive electrode plate and the negative electrode plate interpose an insulating layer in between and are arranged in the vertical direction of the coin-type battery. Fig. 1b also shows that, in the embodiment, the positive electrodes and the aforementioned layers 14 are arranged in the lateral direction and laminated in the extending direction of the positive electrode collector. The relation between negative electrodes and the aforementioned layers 18 is also the same.

A method for producing a positive electrode plate 11 and a negative electrode plate 15 in the case of using a positive electrode and a negative electrode that allow lithium ions to be implanted and discharged as active materials wherein faradaic reaction occurs is explained hereunder. The active material of a positive electrode comprises oxides containing lithium. The examples of such usable oxides are: oxides having a laminar structure such as LiCoO₂, LiNiO₂, LiMn_{1/3}Ni_{1/3}Co_{1/3}O₂ and LiMn_{0.4}Ni_{0.4}Co_{0.2}O₂; Mn oxides having a spinel-type crystal structure such as LiMn₂O₄ and Li₁₊ₓMn₂₋ₓO₄; and substances formed by replacing a part of Mn with Co, Cr and other elements.

A positive electrode active material generally has a high resistance and therefore the electric conductivity of a positive electrode active material is supplemented by mixing carbon powder as a conductive agent. Since both a positive electrode active material and a conductive agent are in the form of powder, they are mixed with a binding agent and the mixture is applied by coating and molded onto a collector.

As a conductive agent, natural graphite, artificial graphite, coke, carbon black, amorphous carbon or the like can be used. Any material can be used as a positive electrode collector as long as the material is hardly soluble in electrolyte and aluminum foil, for example, can be used. A positive electrode is produced by: coating a positive electrode collector with positive electrode slurry formed by mixing a positive electrode active material, a conductive agent, a binding agent and organic solvent by using a blade, namely by the doctor blade method; and then heating and drying the coated positive electrode collector to evaporate the organic solvent.

In an energy device according to the present invention, a layer wherein high-reaction-rate faradaic reaction or non-faradaic reaction occurs is further applied by coating between the positive electrodes produced as stated above. Here, in the case of this embodiment, the positive electrodes and the aforementioned layers are formed so as to be nearly perpendicular to the positive electrode collector.

As a layer wherein non-faradaic reaction occurs, a substance having a large specific surface area and not causing oxidation-reduction reaction in a wide electric potential range, for example a carbon material such as activated carbon, carbon black, carbon nano-tube or the like, can be used. It is desirable, for example, to use activated carbon from the viewpoint of a specific surface area and a material cost. It is further desirable to use activated carbon 1 to 100 µm in grain diameter and 1,000 to 3,000 m²/g in specific surface area, having pores 0.002 µm or less in diameter, called micro-pores, pores 0.002 to 0.05 µm in diameter, called meso-pores, or pores 0.05 µm or more in diameter, called macro-pores.

Further, as a layer wherein high-reaction-rate faradaic reaction occurs, an electrically conductive high polymer material such as polyaniline, polythiophene, Polypyrrole, polyacene or polyacetylene, graphite fine powder or the like can also be used.

By coating a positive electrode with slurry formed by mixing a binding agent with the aforementioned material, a layer wherein high-reaction-rate faradaic reaction or non-faradaic reaction occurs is bonded to the positive electrode. A positive electrode plate can be produced by: heating and drying thus produced positive electrode mixture and the layer wherein high-reaction-rate faradaic reaction or non-faradaic reaction occurs to evaporate organic solvent;
press-forming the positive electrode by roll press; and sticking together the collector, the positive electrode mixture and the layer wherein high-reaction-rate faradaic reaction or non-faradaic reaction occurs.

The bonding agents used here include: fluororesin such as Polytetrafluoroethylene, polyvinylidene fluoride, fluororubber, etc.; thermoplastic resin such as Polypropylene, polyethylene, etc.; thermosetting resin such as polyvinyl alcohol, etc.; and the like. As a negative electrode active material, graphite and amorphous carbon capable of electrochemically absorbing and desorbing lithium can be used. Other than carbon material, it is acceptable to use an oxide negative electrode such as SiO₂ or an alloying material containing Li, Si, Sn, etc. Besides, it is also possible to use a composite material of the aforementioned oxide negative electrode or alloying material and carbon material.

Since a negative electrode active material is generally in the form of powder, it is mixed with a binding agent and the mixture is applied by coating and molded onto a collector. Any material can be used as a negative electrode material as long as the material hardly alloys with lithium and copper foil, for example, can be used.
Negative electrode slurry formed by mixing a negative electrode active material, a binding agent and organic solvent is deposited on a negative electrode collector by the doctor blade method or another method and thereafter the organic solvent is evaporated by drying. In the same way as a positive electrode, it is also possible to apply by coating a layer wherein high-reaction-rate faradaic reaction or non-faradeic reaction occurs in between. Here, in the case of this embodiment, the negative electrodes and the aforementioned layers are formed so as to be nearly perpendicular to the negative electrode collector.

As a layer wherein non-faradaic reaction occurs, a substance having a large specific surface area and not causing oxidation-reduction reaction in a wide electric potential range, for example a carbon material such as activated carbon, carbon black, carbon nano-tube or the like, or a substance capable of absorbing and desorbing lithium ions such as graphite fine powder, can be used. Further, as a layer wherein high-reaction-rate faradaic reaction occurs, an electrically conductive high polymer material such as polyaniline, polythiophene, Polypyrrole, polyacene or polyacetylene, graphite fine powder or the like can also be used. By coating a negative electrode with slurry formed by mixing a binding agent with the aforementioned material, a layer wherein high-reaction-rate faradaic reaction or non-faradaic reaction occurs is bonded to the negative electrode. However, in the case of using a negative electrode capable of implanting and discharging lithium ions as an active material wherein faradaic reaction occurs and activated carbon as an active material wherein non-faradaic reaction occurs, since the specific surface area of the activated carbon is large, side reaction, called irreversible reaction, with electrolyte occurs on the surface of the activated carbon during charging and the discharging capacity decreases largely. For that reason, it is not preferable to apply a layer wherein non-faradaic reaction occurs.

A negative electrode plate can be produced by press-forming the coated negative electrode by roll press. An insulating layer 19 electrically insulates the aforementioned positive electrode plate and negative electrode plate from each other and is composed of a porous film of a polymer such as polyethylene, polypropylene, 4 fluoridation ethylene or the like, those acting as an insulating layer which allows only movable ions to pass through. As electrolyte 1a, solution formed by adding lithium salt electrolyte such as 6 fluoridation phosphoric acid lithium (LiPF₆), 4 fluoridation boric acid lithium (LiBF₄), etc. by about 0.5 to 2 M in volume concentration to organic solvent such as ethylene carbonate (EC), propylene carbonate (PC), dimethyl carbonate (DMC), diethyl carbonate (DEC), methylethyl carbonate (MEC), etc. can be used.

Layers wherein high-reaction-rate faradaic reaction or non-faradaic reaction occurs are formed on a positive electrode produced by using nickel hydroxide or nickel oxide as the basic material and a negative electrode provided with a hydrogen absorbing alloy, respectively. Layers wherein high-reaction-rate faradaic reaction or non-faradaic reaction occurs are formed on a positive electrode produced by using nickel hydroxide as a positive electrode active material and a negative electrode produced by using cadmium as a negative electrode active material, respectively. Layers wherein high-reaction-rate faradaic reaction or non-faradaic reaction occurs are formed on a positive electrode comprising lead dioxide of α-PbO₂ or β-PbO₂ and a negative electrode comprising metallic lead, respectively.

As a layer wherein high-reaction-rate faradaic reaction or non-faradaic reaction occurs, a substance having a large specific surface area and not causing oxidation-reduction reaction in a wide electric potential range, for example carbon material such as activated carbon powder, activated carbon fiber, carbon black, carbon nano-tube, etc. or electrically conductive high polymer materials such as polyaniline, polythiophene, Polypyrrole, polyacene, polyacetylene, etc., can be used.

In the case of using a positive electrode produced by using nickel hydroxide or nickel oxide as the basic material and a negative electrode provided with a hydrogen absorbing alloy, and a positive electrode produced by using nickel hydroxide as a positive electrode active material and a negative electrode produced by using cadmium as a negative electrode active material, alkali aqueous solution (potassium hydroxide, sodium hydroxide, lithium hydroxide, etc.) is used as the electrolyte. In the case of using a positive electrode comprising lead dioxide of α-PbO₂ or β-PbO₂ and a negative electrode comprising metallic lead, sulfuric acid aqueous solution is used as the electrolyte.

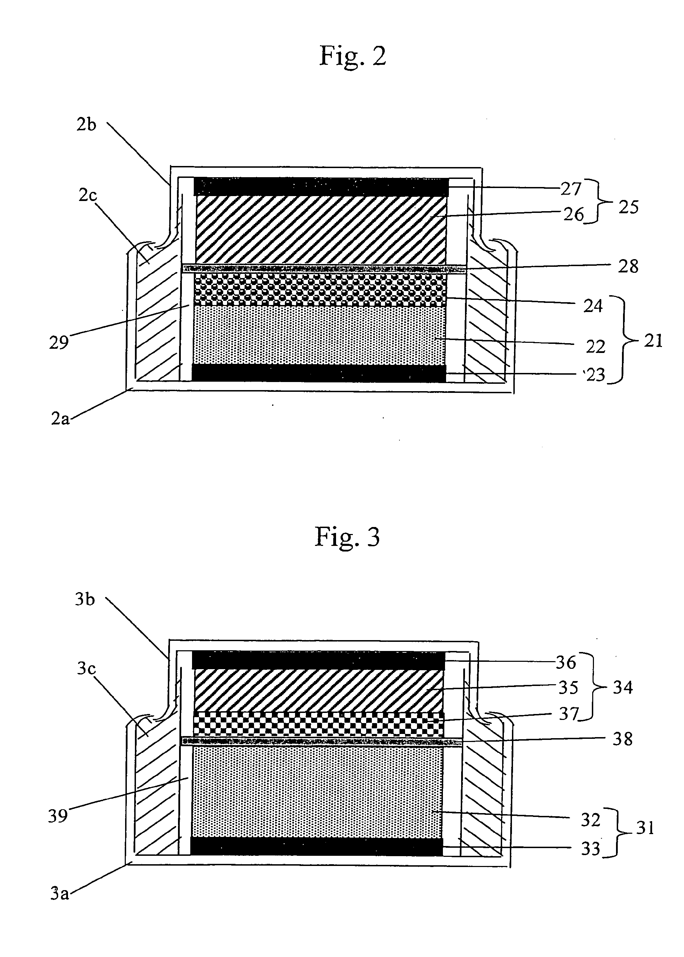

In the above cases, mainly on the basis of Fig. 1, both the positive electrode plate 11 and the negative electrode plate 15 are provided with layers 14 and 18, respectively, wherein high-reaction-rate faradaic reaction or non-faradaic reaction occurs. However, the case of forming a layer 24 wherein high-reaction-rate faradaic reaction or non-faradaic reaction occurs only on the positive electrode plate 21 as shown in Fig. 2 is also included in the present invention. Here, as the configuration of a positive electrode plate and a negative electrode plate, any of the combinations of vertical direction/ vertical direction, lateral direction/ lateral direction, vertical direction/ lateral direction and lateral direction/ vertical direction can properly be selected and adopted.

Further, as shown in Fig. 3, an energy device according to the present invention can also be produced only by forming a layer 37 wherein high-reaction-rate faradaic reaction or non-faradaic reaction occurs on a negative electrode plate 34.

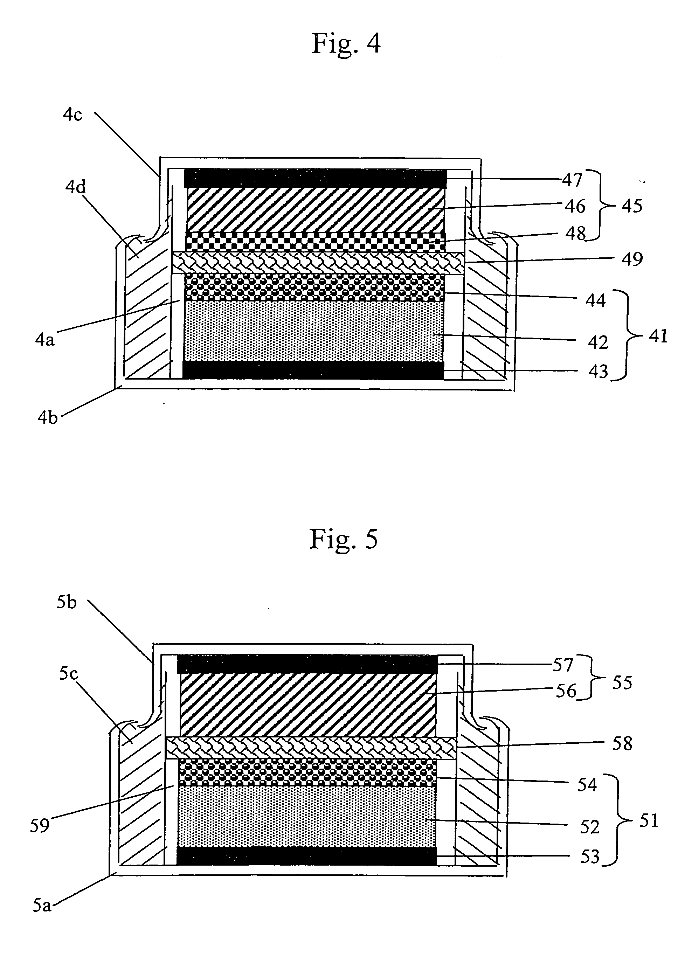

Furthermore, as shown in Figs. 4, 5 and 6, an energy device according to the present invention can also be produced by interposing gel electrolyte 49, 58 and 68 between a positive electrode plate 41 and a negative electrode plate 45, between a positive electrode plate 51 and a negative electrode plate 55, and between a positive electrode plate 61 and a negative electrode plate 64, respectively.

Gel electrolyte can be produced by swelling a polymer such as polyethylene oxide (PEO), polymethacrylate (PMMA), polyacrylonitrile (PAN), polyvinylidene fluoride (PVdF), polyvinylidene fluoride-hexafluoropropylene polymer (PVdF-HFP), etc. with electrolyte.

An energy device module can be produced as follows by connecting a plurality of energy devices according to the present invention. A plurality of energy devices are connected in series in accordance with an intended voltage. A means of detecting the voltage of each energy device and a means of controlling charging current and discharging current flowing in each energy device are provided, and further a means of giving commands to the two means is provided. A communication means is provided so as to be able to communicate between those means through electrical signals.

In the event of charging, when the voltage of any of the energy devices detected by the aforementioned means of detecting voltage is lower than a predetermined charging voltage, the energy device is charged by feeding current. Once the voltage of an energy device reaches the predetermined charging voltage, overcharging of the energy device is prevented by controlling the charging current so as not to be fed any more in accordance with electrical signals sent from the command means.

Then in the event of discharging, likewise, the voltage of each energy device is detected by the aforementioned voltage detection means and when the voltage of an energy device reaches a prescribed discharging voltage, the discharging current is controlled so as not to be fed any more. With regard to the accuracy of the voltage detection, a desirable voltage resolution is 0.1 V or less, more desirably 0.02 V or less. An energy device module can be realized by controlling energy devices so as to be operated without overcharging or over-discharging.

### EXAMPLES

Next, examples of energy devices according to the present invention are shown and explained concretely. However, the present invention is not limited to the examples described below.

### Comparative Example 1

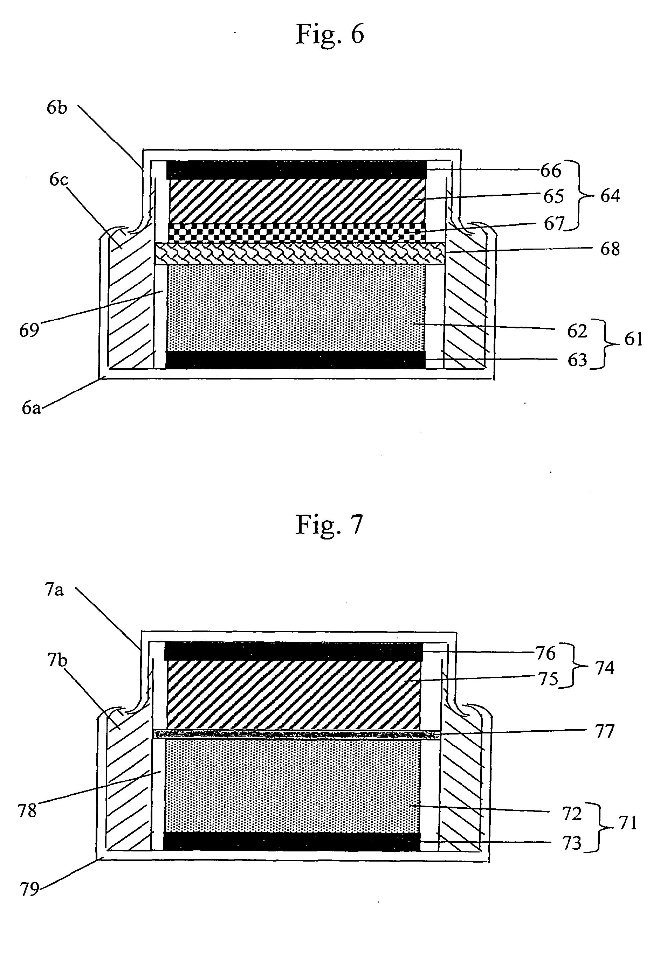

A coin-type lithium secondary battery having the configuration shown in Fig. 7 was produced. The positive electrode 72 was produced as follows. As the positive electrode active material, Li_{1.05}Mn_{1.95}O₄ of 10 µm in average grain diameter was used. As an electrically conductive auxiliary agent, a mixture formed by mixing graphite carbon 3 µm in average grain diameter having a specific surface area of 13 m²/g and carbon black 0.04 µm in average grain diameter having a specific surface area of 40 m²/g so that the ratio thereof was four to one in weight was used. As the binding agent, solution formed by dissolving polyvinylidene fluoride of 8 wt% in N-methylpyrrolidone beforehand was used. Then, the positive electrode active material, electrically conductive auxiliary agent and polyvinylidene fluoride were put together so that the percentages thereof were 85, 10 and 5% respectively and mixed sufficiently, and the mixture was used as the positive electrode slurry. The positive electrode slurry was applied onto one surface of the positive electrode collector 73 comprising aluminum foil 20 µm in thickness by coating and dried. The product was subjected to roll press and produced into the electrode. The weight of the positive electrode mixture was controlled so as to be 15 mg/cm². The produced electrode was punched into a disc 16 mm in diameter and used as the positive electrode plate 71. The negative electrode 75 was produced by the following method.

The negative electrode active material was produced by mechanically mixing amorphous carbon 10 µm in average grain diameter and carbon black 0.04 µm in average grain diameter having a specific surface area of 40 m²/g so that the ratio thereof was 95 to 5 in weight. As the binding agent, solution formed by dissolving polyvinylidene fluoride of 8 wt% in N-methylpyrrolidone beforehand was used. Then the mixed carbon material comprising amorphous carbon and carbon black and polyvinylidene fluoride were mixed sufficiently so that the ratio thereof was 90 to 10 in weight. The produced slurry was applied onto one surface of the negative electrode collector 76 comprising copper foil 10 µm in thickness by coating and dried. The product was subjected to roll press and produced into the electrode. The weight of the negative electrode mixture was controlled so as to be 4.5 mg/cm². The produced electrode was punched into a disc 16 mm in diameter and used as the negative electrode plate 74. The polyethylene porous separator 77 40 µm in thickness was interposed between the positive electrode and the negative electrode and electrolyte 78 being produced by mixing ethylene carbonate and dimethyl carbonate (one to one in volume ratio) and containing 1 mol/dm³ LiPF₆ was injected. Here, the positive electrode can 79 and the negative electrode can 7a were sealed with the gasket 7b and also insulated from each other.

### Example 1

A coin-type energy device having the configuration shown in Fig. 2 was produced. The positive electrode 22 was produced, in the same way as the positive electrode 72 of Comparative Example 1 except that the weight of the positive electrode mixture was controlled so as to be 12 mg/cm² in this case, by applying the mixture onto one surface of the positive electrode collector 23 comprising aluminum foil 20 µm in thickness and drying it. Further, activated carbon having a specific surface area of 2,000 m²/g and carbon black 0.04 µm in average grain diameter having a specific surface area of 40 m²/g were mixed so that the ratio thereof was 8 to 1 in weight. As the binding agent, solution formed by dissolving polyvinylidene fluoride of 8 wt% in N-methylpyrrolidone beforehand was used. Then the activated carbon, carbon black and polyvinylidene fluoride were put together so that the percentages thereof were 80, 10 and 10% respectively and mixed sufficiently, and the mixture was used as the slurry. The slurry was applied onto the positive electrode 22 by coating and the layer 24 wherein non-faradaic reaction occurred was formed. The product was dried and subjected to roll press, and thus the electrode was produced. The produced electrode was punched into a disc 16 mm in diameter and used as the positive electrode plate 21.

The total weight of the positive electrode 22 and the layer 24 wherein non-faradaic reaction occurred was adjusted so as to be 15 mg/cm². In this case, the percentages of the positive electrode active material, electrically conductive auxiliary agent, polyvinylidene fluoride (the ratio of the activated carbon to the positive electrode active material was 19 wt%) and activated carbon to the total weight of the positive electrode 22 and the layer 24 wherein non-faradaic reaction occurred were 68, 10, 6 and 16% respectively in weight, and the content of the activated carbon was 16 wt%. The negative electrode 26 was produced by applying the mixture onto the negative electrode collector 27 by coating and subjecting it to press, in the same way as the negative electrode 75 of Comparative Example 1. The produced electrode was punched into a disc 16 mm in diameter and used as the negative electrode plate 25. The polyethylene porous separator 28 40 µm in thickness was interposed between the positive electrode and the negative electrode and electrolyte 29 being produced by mixing ethylene carbonate and dimethyl carbonate (one to one in volume ratio) and containing 1 mol/dm³ LiPF₆ was injected. Here, the positive electrode can 2a and the negative electrode can 2b were sealed with the gasket 2c and also insulated from each other. Here, a preferable amount of the coated activated carbon (the ratio of the weight of the activated carbon to the weight of the active material) was 16 to 40% in weight.

### Comparative Example 2

The electrode was produced in the same way as the positive electrode 72 of Comparative Example 1 except that, like in Example 1, the percentages of the weights of the positive electrode active material, electrically conductive auxiliary agent, polyvinylidene fluoride and activated carbon to the total weight of the positive electrode 22 and the layer 24 wherein non-faradaic reaction occurred were 68, 10, 6 and 16% respectively. However, in this case, most of the mixture peeled off from the aluminum foil when the electrode was subjected to roll press and a normal electrode could not be produced.

### Comparative Example 3

The electrode was produced in the same way as the positive electrode 72 of Comparative Example 1 except that the weight percentages of the positive electrode active material, electrically conductive auxiliary agent, polyvinylidene fluoride and activated carbon were 74, 10, 6 and 10% respectively. The produced positive electrode, though it contained activated carbon, was not so laminated as the positive electrode 22 and the layer 24 wherein non-faradaic reaction occurred in Example 1 but was formed by mixing the activated carbon in the positive electrode 72. A coin-type lithium secondary battery was produced in the same way as Comparative Example 1 except that the above positive electrode was used.

Output performance at low temperatures of the energy device of Example 1 and the lithium secondary batteries of Comparative Examples 1 and 3 was evaluated by the method shown below.

### Evaluation method of output performance

The above energy device and lithium secondary batteries were charged and discharged at 25°C under the following conditions. Firstly, they were charged at a constant current of 0.85 mA/cm² in current density up to the voltage of 4.1 V and thereafter charged for 3 hours under the constant voltage of 4.1 V and the constant current. After finishing the charging, they were retained for 30 minutes and then discharged at the constant current of 0.28 mA/cm² up to the discharge finishing voltage of 2.7 V.

The similar charging and discharging were repeated for 5 cycles. After that, they were charged at a constant current of 85 mA/cm² and thereafter charged for 3 hours under the constant voltage of 4.1 V and the constant current. The state of the charging up to 4.1 V was defined as DOD = 0%. Under this state, the energy device and lithium secondary batteries were put into a thermostat kept at -30°C. After the lapse of about one hour, they were discharged for a very short time of 10 seconds at the current of 0.08, 1.7 and 3.4 mA/cm² and the output performance thereof was investigated.

After they were discharged respectively, they were retained for 10 minutes, and then the amounts corresponding to the respective discharged amounts were charged at 0.17 mA/cm². For example, after one of them was discharged for 10 seconds at 1.7 mA/cm², it was charged for 100 seconds at 0.17 mA/cm². They were retained for 30 minutes after the charging and, after the voltage was stabilized, subjected to the next measurement. Thereafter, they were discharged at the constant current of 0.17 mA/cm² up to the voltage of DOD = 40%.

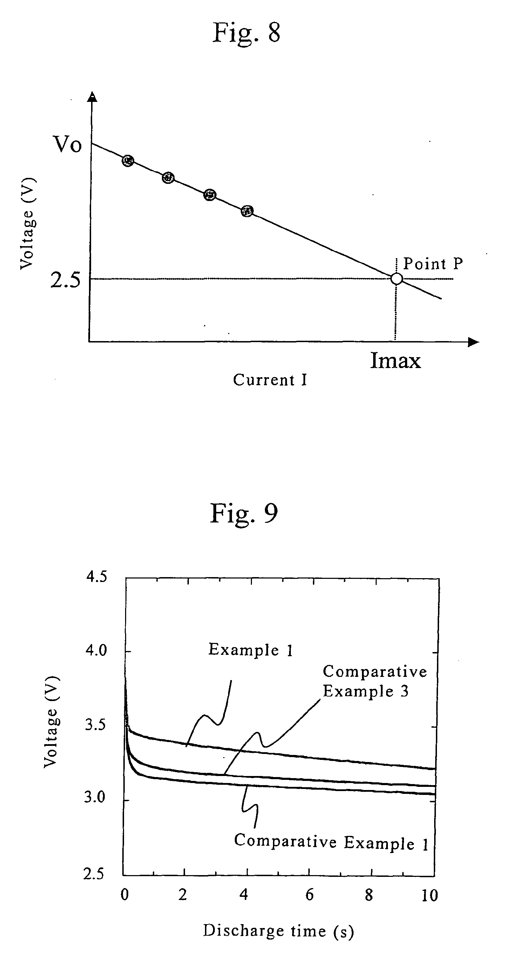

After that, output performance was investigated under the same conditions as DOD = 0% shown earlier. The voltage at the time when two seconds passed after the start of discharging was determined from the charging-discharging curve obtained by the charging-discharging test for 10 seconds and plotted on a graph representing a current value at the time of measurement on the horizontal axis and a voltage at the time when two seconds passed after the start of discharging on the vertical axis. Then, as shown in Fig. 8, the straight line determined by the least-square method was extrapolated in the I-V map and the point P where the extrapolated line and the line representing 2.5 V intersected with each other was determined. The output was calculated as (a current value at an intersecting point determined by extrapolation: Imax) x (a voltage at the start of each charging-discharging: Vo).

The evaluation results of low temperature performance shown on Table 1 are expressed by relative values obtained by regarding the output of the energy device of Example 1 as one. The performance of the energy device of Example 1 exceeded that of the lithium secondary battery of Comparative Example 1 in both the cases of DOD = 0 and 40% and, in the case of DOD = 40% in particular, the output of the energy device of Example 1 was about twice as much.

**Table 1**

| Items | Output ratio | |
|---|---|---|
| | DOD=0% | DOD=40% |
| Example 1 | 1 | 1 |
| Comparative Example 1 | 0.88 | 0.56 |
| Comparative Example 3 | 0.94 | 0.62 |

Fig. 9 shows discharge curves when the energy device of Example 1 and the lithium secondary battery of Comparative Example 1 are discharged for 10 seconds at 3.4 mA/cm² under the conditions of -30°C and DOD = 40%. It is understood from Fig. 9 that the voltage change from the start of discharging is obviously smaller in the case of the energy device of Example 1 than in the case of the lithium secondary battery of Comparative Example 1 and resultantly the output performance of the energy device of Example 1 is improved. From the above results, it is understood that low temperature output performance can remarkably be improved by using an energy device according to the present invention.

### Example 2

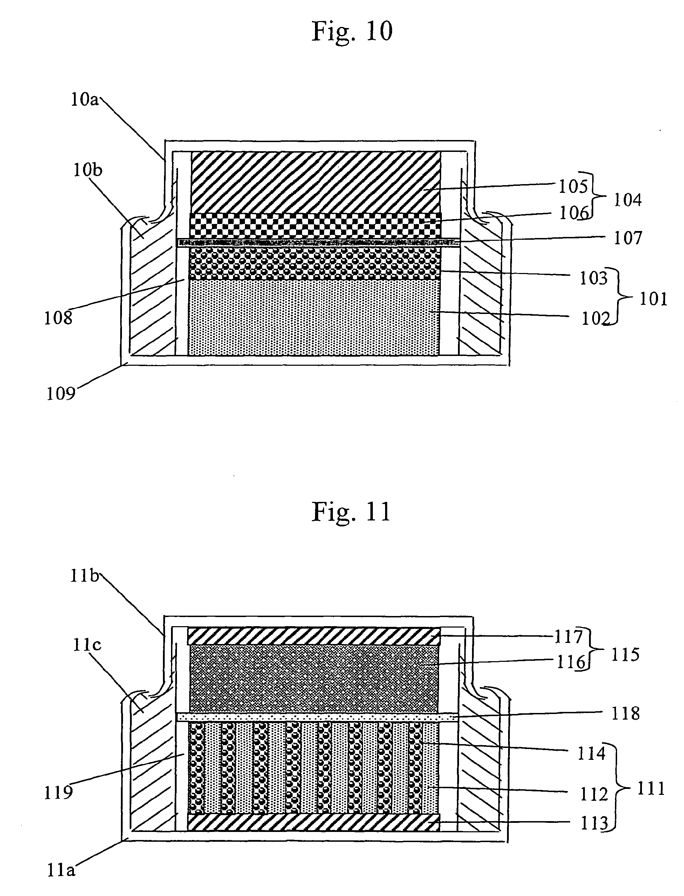

A coin-type energy device having the configuration shown in Fig. 10 was produced. A positive electrode 102 was produced by: forming paste by mixing the mixture of nickel hydroxide powder acting as an active material and cobalt hydroxide acting as an electrically conductive auxiliary agent with the solution produced by dissolving PVA (polyvinyl alcohol) in water; filling foamed metal comprising Ni with the paste; and thereafter drying and pressing it. A layer 103 wherein non-faradaic reaction occurred was formed on the positive electrode 102 by applying thereon slurry in the state of paste produced by mixing the mixture of activated carbon and carbon black acting as an electrically conductive auxiliary agent with the solution produced by dissolving PTFE (polytetrafluoroethylene) in water onto the positive electrode 102 by coating. The product was dried and subjected to roll press, and thus the electrode was produced. The produced electrode was punched into a disk 16 mm in diameter and used as the positive electrode plate 101.

Next, paste was produced by: crushing an AB5-system hydrogen absorbing alloy; adding carbon black acting as an electrically conductive material, carboxymethylcellulose acting as a binding agent, and water to the hydrogen absorbing alloy powder produced as above; and mixing them. A negative electrode 105 was produced by coating a punched metal with the produced paste, and drying and then pressing it. A layer 106 wherein non-faradaic reaction occurred was formed by applying slurry in the state of paste produced by mixing the mixture of activated carbon and carbon black acting as an electrically conductive auxiliary agent with the solution produced by dissolving PTFE (polytetrafluoroethylene) in water onto the negative electrode 105 by coating. The product was dried and subjected to roll press, and thus the electrode was produced. The produced electrode was punched into a disc 16 mm in diameter and used as the negative electrode plate 104. A separator 107 was interposed between the positive and negative electrode plates and 30% KOH aqueous solution was injected as alkali electrolyte. Here, the positive electrode can 109 and the negative electrode can 10a were sealed with the gasket 10b and also insulated from each other.

### Example 3

A coin-type energy device having the configuration shown in Fig. 11 was produced. A positive electrode 112 was produced by: coating one surface of a positive electrode collector 113 comprising aluminum foil 1 mm in width and 20 µm in thickness with positive electrode slurry of Comparative Example 1 in such a manner as to form non-coated portions at intervals of 1 mm; and drying them. The weight of the positive electrode mixture was controlled so as to be 25 mg/cm². Further, activated carbon having a specific surface area of 2,000 m²/g and carbon black 0.04 µm in average grain diameter having a specific surface area of 40 m²/g were mixed so that the ratio thereof was 8 to 1 in weight. As the binding agent, solution formed by dissolving polyvinylidene fluoride of 8 wt% in N-methylpyrrolidone beforehand was used. Then the activated carbon, carbon black and polyvinylidene fluoride were put together so that the percentages thereof were 80, 10 and 10% respectively and mixed sufficiently, and the mixture was used as the slurry. The slurry was applied onto the non-coated portions of the positive electrode collector 113 by coating and the region 114 wherein non-faradaic reaction occurred was formed. The product was dried and subjected to roll press, and thus the electrode was produced. The produced electrode was punched into a disc 16 mm in diameter and used as the positive electrode plate 111. The total weight of the positive electrode 112 and the region 114 wherein non-faradaic reaction occurred was controlled so as to be 15 mg/cm². In this case, the percentages of the positive electrode active material, electrically conductive auxiliary agent, polyvinylidene fluoride and activated carbon to the total weight of the positive electrode 112 and the region 114 wherein non-faradaic reaction occurred were 68, 10, 6 and 16% respectively in weight, and the content of the activated carbon was 16 wt%. The negative electrode 116 was produced by applying the mixture onto the negative electrode collector 117 by coating and subjecting them to press, in the same way as the negative electrode 75 of Comparative Example 1. The produced electrode was punched into a disc 16 mm in diameter and used as the negative electrode plate 25. The polyethylene porous separator 28 40 µm in thickness was interposed between the positive electrode plate and the negative electrode plate and electrolyte 119 being produced by mixing ethylene carbonate and dimethyl carbonate (one to one in volume ratio) and containing 1 mol/dm³ LiPF₆ was injected. Here, the positive electrode can 11a and the negative electrode can 11b were sealed with the gasket 11c and also insulated from each other.

### Example 4

A coin-type energy device having the configuration shown in Fig. 11 was produced. A positive electrode 112 was produced by: coating one surface of a positive electrode collector 113 comprising aluminum foil 2 mm in width and 20 µm in thickness with the positive electrode slurry of Comparative Example 1 and Example 3 in such a manner as to form non-coated portions at intervals of 1 mm; and drying them. The weight of the positive electrode mixture was controlled so as to be 20 mg/cm². Further, in the same way as Example 3, activated carbon having a specific surface area of 2,000 m²/g and carbon black 0.04 µm in average grain diameter having a specific surface area of 40 m²/g were mixed so that the ratio thereof was 8 to 1 in weight. As the binding agent, solution formed by dissolving polyvinylidene fluoride of 8 wt% in N-methylpyrrolidone beforehand was used. Then the activated carbon, carbon black and polyvinylidene fluoride were put together so that the percentages thereof were 80, 10 and 10% respectively and mixed sufficiently, and the mixture was used as the slurry. The slurry was applied onto the positive electrode collector 113 by coating and the region 114 wherein non-faradaic reaction occurred was formed. The product was dried and subjected to roll press, and thus the electrode was produced. The produced electrode was punched into a disc 16 mm in diameter and used as the positive electrode plate 111. The total weight of the positive electrode 112 and the region 114 wherein non-faradaic reaction occurred was controlled so as to be 15 mg/cm². In this case, the percentages of the positive electrode active material, electrically conductive auxiliary agent, polyvinylidene fluoride and activated carbon to the total weight of the positive electrode 112 and the region 114 wherein non-faradaic reaction occurred were 68, 10, 6 and 16% respectively in weight, and the content of the activated carbon was 16 wt%. The negative electrode 26 was produced by applying the mixture onto the negative electrode collector 117 by coating and subjecting them to press, in the same way as the negative electrode 75 of Comparative Example 1. The produced electrode was punched into a disc 16 mm in diameter and used as the negative electrode plate 115. The polyethylene porous separator 28 40 µm in thickness was interposed between the positive electrode plate and the negative electrode plate and electrolyte 1 19 being produced by mixing ethylene carbonate and dimethyl carbonate (one to one in volume ratio) and containing mol/dm³ LiPF₆ was injected. Here, the positive electrode can 11a and the negative electrode can 11b were sealed with the gasket 11c and also insulated from each other.

Output performance at low temperatures of the energy devices of Examples 3 and 4 and the lithium secondary battery of Comparative Example 1 was evaluated by the method shown below.

**Table 2**

| Items | Output ratio | |
|---|---|---|
| | DOD=0% | DOD=40% |
| Example 3 | 1 | 1 |
| Example 4 | 0.97 | 0.93 |
| Comparative Example 1 | 0.88 | 0.56 |

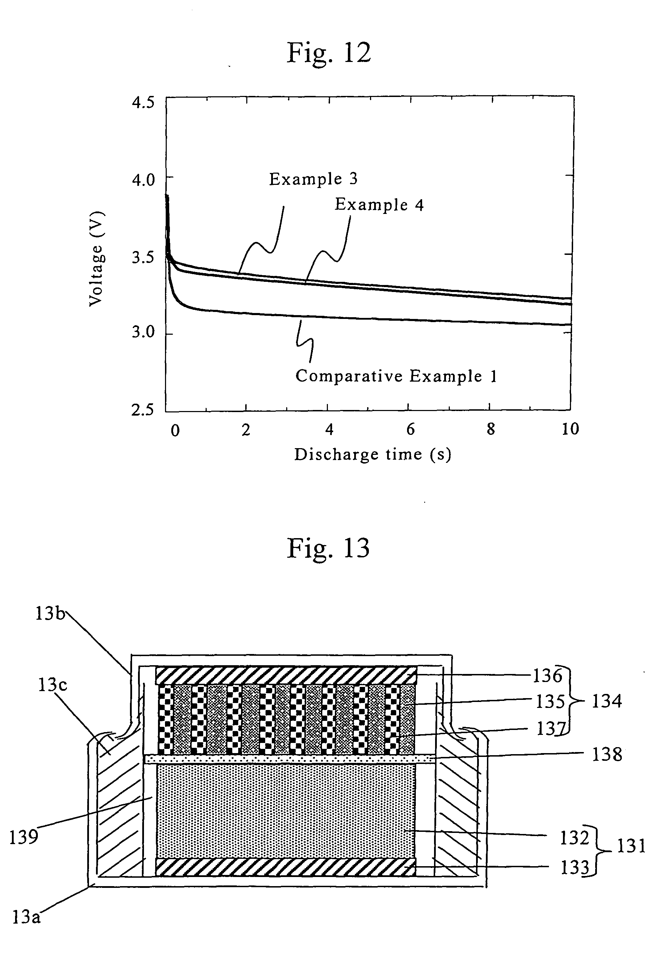

The evaluation results of low temperature performance shown on Table 2 are expressed by relative values obtained by regarding the output of the energy device of Example 3 as one. The performance of the energy device of Example 3 exceeded that of the lithium secondary battery of Comparative Example 1 in both the cases of DOD = 0 and 40% and, in the case of DOD = 40% in particular, the output of the energy device of Example 1 was about twice as much. Fig. 12 shows discharge curves when the energy devices of Examples 3 and 4 and the lithium secondary battery of Comparative Example 1 are discharged for 10 seconds at 3.4 mA/cm² under the conditions of -30°C and DOD = 40%. It is understood from the figure that the voltage change from the start of discharging is obviously smaller in the case of the energy devices of Examples 3 and 4 than in the case of the lithium secondary battery of Comparative Example 1 and resultantly the output performance of the energy devices of Examples 3 and 4 is improved. From the above results, it is understood that low temperature output performance can remarkably be improved by using an energy device according to the present invention.

The case of forming a layer 114 wherein high-reaction-rate faradaic reaction or non-faradaic reaction occurs only in a positive electrode plate 111 mainly on the basis of Fig. 11 is also included in the present invention. Further, as shown in Fig. 13, an energy device according to the present invention can also be produced only by forming a layer 137 wherein high-reaction-rate faradaic reaction or non-faradaic reaction occurs in a negative electrode plate 134.

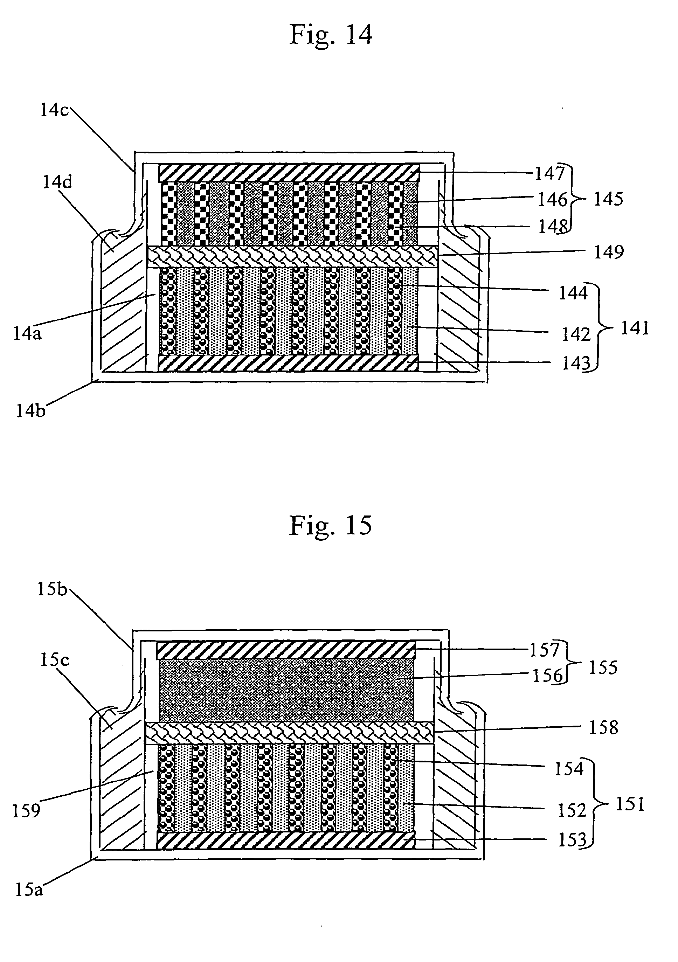

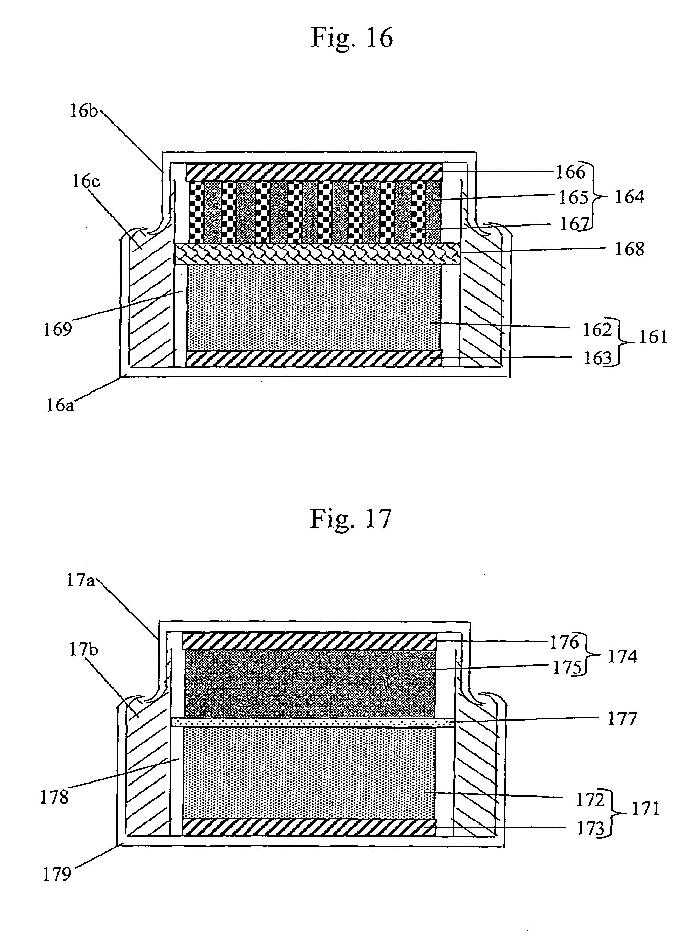

In addition, as shown in Figs. 14, 15 and 16, an energy device according to the present invention can also be produced by providing gel electrolyte 149, 158 and 168 between a positive electrode plate 141 and a negative electrode plate 145, a positive electrode plate 151 and a negative electrode plate 155, and a positive electrode plate 161 and a negative electrode plate 164, respectively.

The applications of an energy device or an energy device module according to the present invention are not particularly limited. For example, it can be used as: a power source of a portable information-telecommunication device such as a personal computer, a word processor, a cordless handset, an electric book player, a cellular phone, a car telephone, a pocket pager, a handy terminal, a walkie-talkie, a portable radio, or the like; or a power source of a portable device such as a portable copier, an electric notebook, an electric calculator, a liquid crystal television, a radio, a tape recorder, a personal headset stereo, a portable CD player, a videotape camera-recorder, an electric shaver, an electronic translating machine, a voice encoder, a memory card, or the like. Further, it can also be applicable: to a home appliance such as a refrigerator, an air conditioner, a television, a stereo set, a water heater, a microwave oven, a dish washing machine, a dryer, a washing machine, lighting equipment, a toy, or the like; or further, as industrial applications, to a medical instrument, an electric power storage system, an elevator, or the like. The present invention is highly effective particularly in a device or system requiring a high input and output and the examples are the applications to a power source of a movable body such as an electric automobile, a hybrid electric automobile, a golf cart, or the like.

## Claims

1. An energy device, said energy device: having both a faradaic reaction mechanism wherein mainly the oxidation state of an active material changes and electric charge transfers inside said active material and a non-faradaic reaction mechanism wherein mainly ions are physically absorbed and desorbed on the surface of an active material and resultantly electric charge is accumulated and discharged; and storing and discharging electric energy by both said reaction mechanisms, **characterized by** having two kinds of electrodes, a positive electrode plate and a negative electrode plate, having at least two regions wherein said faradaic reaction or said non-faradaic reaction occurs.

2. An energy device according to claim 1, **characterized by** having two kinds of electrodes, a positive electrode plate and a negative electrode plate, constructed by laterally arranging a region wherein said non-faradaic reaction occurs and a region wherein said faradaic reaction occurs.

3. An energy device according to claim 1, **characterized by** having two kinds of electrodes, a positive electrode plate and a negative electrode plate, constructed by vertically arranging a region wherein said non-faradaic reaction occurs and a region wherein said faradaic reaction occurs.

4. An energy device according to claim 1, **characterized by** having two kinds of electrodes; a negative electrode plate constructed by disposing a region wherein said non-faradaic reaction occurs in the surface layer of a region wherein said faradaic reaction occurs and a positive electrode plate having only a region wherein said faradaic reaction occurs.

5. An energy device **characterized by**: having a faradaic reaction mechanism wherein mainly the oxidation state of an active material changes and electric charge transfers to said active material through an electrode interface; and storing and discharging electric energy by at least two kinds of reaction mechanisms that show low and high reaction rates respectively in said faradaic reaction.

6. An energy device according to claim 5, **characterized by** having two kinds of electrodes; a positive electrode plate and a negative electrode plate having at least two different kinds of reaction mechanisms that show low and high reaction rates respectively in said faradaic reaction.

7. An energy device according to claim 5, **characterized by** having two kinds of electrodes; a positive electrode plate constructed by disposing a region wherein said faradaic reaction occurs at a high rate in the surface layer of a region wherein said faradaic reaction occurs at a low rate and a negative electrode plate having a layer wherein solely either one of said faradaic reactions occurs.

8. An energy device according to claim 5, **characterized by** having two kinds of electrodes; a negative electrode plate constructed by disposing a region wherein said faradaic reaction occurs at a high rate in the surface layer of a region wherein said faradaic reaction occurs at a low rate and a positive electrode plate having a layer wherein solely either one of said faradaic reactions occurs.

9. An energy device according to claim 1, **characterized by** electrically insulating said positive electrode plate and said negative electrode plate from each other and disposing an insulating layer that allows only movable ions to pass through between said positive electrode plate and said negative electrode plate.

10. An energy device according to claim 1, **characterized by** electrically insulating said positive electrode plate and said negative electrode plate from each other and disposing an insulating layer that allows only movable ions to pass through.

11. An energy device according to claim 1, **characterized by** disposing gel electrolyte comprising a polymer and electrolyte between said positive electrode plate and said negative electrode plate.

12. An energy device according to claim 1, **characterized by**: using a positive electrode and a negative electrode that allow lithium ions to be implanted and discharged as active materials wherein faradaic reaction occurs; and containing lithium salt or a lithium compound as the supply source of movable ions.

13. An energy device according to claim 1, **characterized by**: as active materials wherein faradaic reaction occurs, using a positive electrode containing nickel oxide as the main active material and a negative electrode containing a hydrogen absorbing alloy as the main active material; and containing a compound that generates hydroxide ions as the supply source of movable ions.

14. An energy device according to claim 1, **characterized by**: as active materials wherein faradaic reaction occurs, using a positive electrode containing nickel oxide as the main active material and a negative electrode containing cadmium as the main active material; and containing a compound that generates hydroxide ions as the supply source of movable ions.

15. An energy device according to claim 1, **characterized by**: as active materials wherein faradaic reaction occurs, using a positive electrode containing lead dioxide as the main active material and a negative electrode containing metallic lead as the main active material; and using sulfuric acid aqueous solution as electrolyte.

16. An energy device according to claim 1, **characterized in that** said active material wherein non-faradaic reaction occurs is a carbon material.

17. An energy device according to claim 6, **characterized by**: using a positive electrode and a negative electrode that allow lithium ions to be implanted and discharged as active materials wherein faradaic reaction occurs at a low rate; and containing lithium salt or a lithium compound as the supply source of movable ions.

18. An energy device according to claim 6, **characterized by**: as active materials wherein faradaic reaction occurs at a low rate, using a positive electrode containing nickel oxide as the main active material and a negative electrode containing a hydrogen absorbing alloy as the main active material; and containing a compound that generates hydroxide ions as the supply source of movable ions.

19. An energy device according to claim 6, **characterized by**: as active materials wherein faradaic reaction occurs at a low rate, using a positive electrode containing nickel oxide as the main active material and a negative electrode containing cadmium as the main active material; and containing a compound that generates hydroxide ions as the supply source of movable ions.

20. An energy device according to claim 6, **characterized by**: as active materials wherein faradaic reaction occurs at a low rate, using a positive electrode containing lead dioxide as the main active material and a negative electrode containing metallic lead as the main active material; and using sulfuric acid aqueous solution as electrolyte.
